# EUROPÄISCHE PATENTANMELDUNG

(11) **EP 3 339 025 A1**
(43) Veröffentlichungstag der Anmeldung: **27.06.2018**
(21) Anmeldenummer: 16205876.2
(22) Anmeldetag: 21.12.2016
(51) Int. Cl.: B32B 37/02, B32B 37/14, B29C 70/02, C23C 4/12, C23C 4/18, B32B 38/00, B29C 53/60, B32B 37/24

(54) **VERFAHREN ZUR HERSTELLUNG EINES VERBUNDWERKSTOFF-BAUTEILS**

(71) Anmelder: Universität Stuttgart, 70174 Stuttgart (DE)
(72) Erfinder: Gadow, Rainer, 84544 Aschau am Inn (DE); Weichand, Patrick, 71120 Grafenau (DE); Popa, Septimiu, 70191 Stuttgart (DE); Killinger, Andreas, 70794 Filderstadt (DE)
(74) Vertreter: Witte, Weller & Partner Patentanwälte mbB

(57) **Zusammenfassung**

Die Erfindung betrifft ein Verfahren zur Herstellung eines Verbundwerkstoff-Bauteils umfassend die folgenden Schritte: Bereitstellung einer Negativform (S10), Applizieren zumindest einer Funktionsschicht mittels thermischen Spritzens auf die Negativform (S12), Applizieren zumindest einer faserverstärkten Kunststoffschicht mit einem aushärtbaren Matrixwerkstoff (S14), Aushärtung des Matrixwerkstoffs (S16) und Ablösen des Verbundwerkstoff-Bauteils von der Negativform (S18).

## Beschreibung

Die Erfindung betrifft ein Verfahren zur Herstellung eines Verbundwerkstoff-Bauteils mit einer faserverstärkten Kunststoffschicht, die auf einer Seite mit einer Funktionsschicht versehen ist.

Unter faserverstärkten Kunststoffen, auch bekannt als Faserverbundkunststoffe, werden Werkstoffe verstanden, die aus einer mit Fasern verstärkten Kunststoffmatrix bestehen.

Als Matrix werden häufig Thermoplaste oder Duroplaste/Thermodure verwendet. Faserverstärkte Kunststoffe mit einer thermoplastischen Matrix bieten den Vorteil, dass sie sich nachträglich umformen oder schweißen lassen. Nach dem Abkühlen der Matrix sind faserverstärkte Kunststoffe mit thermoplastischer Matrix einsatzbereit. Nachteilig ist jedoch, dass diese Kunststoffe bei erhöhter Temperatur erweichen. Mit zunehmendem Fasergehalt sinkt zudem ihre Kriechneigung. Faserverstärkte Kunststoffe mit duroplastischer Matrix lassen sich nach dem Aushärten bzw. dem Vernetzen der Matrix nicht mehr umformen. Sie weisen im Gegensatz zu den Kunststoffen auf Basis von Thermoplasten einen hohen Temperatureinsatzbereich auf. Dies gilt besonders für heißhärtende Systeme, die unter hohen Temperaturen ausgehärtet werden. Die Temperatureinsatzgrenze wird durch die Lage der Glasübergangstemperatur bestimmt. Faserverstärkte Kunststoffe mit duroplastischer Matrix weisen meist höhere Festigkeiten als faserverstärkte Kunststoffe mit thermoplastischer Matrix auf.

In einem faserverstärkten Kunststoff umgibt die Matrix die Fasern, die durch Adhäsiv- oder Kohäsivkräfte an die Matrix gebunden sind. Faserverstärkte Kunststoffe weisen in der Regel hohe spezifische Steifigkeiten und Festigkeiten auf. Dies macht sie zu geeigneten Werkstoffen bei Leichtbauanwendungen. Die mechanischen und thermischen Eigenschaften von faserverstärkten Kunststoffen können über eine Vielzahl von Parametern eingestellt werden. Neben der Faser-Matrix-Kombination können beispielsweise der Faserwinkel, der Faservolumenanteil oder die Schichtreihenfolge variiert werden.

Ein wesentlicher Nachteil von faserverstärkten Kunststoffen liegt in der begrenzten tribologischen und thermischen Beständigkeit bei entsprechenden Belastungen. Durch das Aufbringen einer Funktionsschicht in Form einer auf die Anwendung abgestimmten Metall-, Keramik- oder Cermet-Schicht kann diesen Nachteilen entgegengewirkt werden.

Im Stand der Technik werden Faserverbundkunststoff-Bauteile und Strukturen mit einer Funktionsschicht beschichtet, die mittels thermischen Spritzens aufgetragen wird. Dieses konventionelle Verfahren setzt im Allgemeinen die folgenden Verfahrensschritte voraus:
1. Bereitstellung eines faserverstärkten Kunststoffbauteils;
2. Oberflächenaktivierung des vorhandenen Bauteils mittels Sandstrahlen, Hochdruckwasserstrahlen, mechanischer Zerspanung, Laserstrukturierung oder chemischem Ätzen;
3. Reinigung des Substrats zum Entfernen von Fett, Schmiermittel und Strahlmittelrückständen;
4. Beschichtung des Substrats durch thermisches Spritzen; und
5. Mechanische Nachbearbeitung (anwendungsabhängig, z.B. mittels Schleifen).

Diese Prozessschritte sind mit einigen Nachteilen verbunden.

Der zweite Verfahrensschritt dient der Vorbereitung der Beschichtung des Faserverbundkunststoffs. In diesem Schritt wird die Oberfläche des Faserverbundkunststoff-Bauteils aufgeraut, um später eine ausreichende mechanische Verklammerung der Funktionsschicht am Substrat zu gewährleisten, um so eine möglichst hohe Haftfestigkeit zu erreichen. Nachteilig hierbei ist, dass eine geringe Oberflächenaktivierung zu einer schlechten Haftfestigkeit zwischen der Funktionsschicht und der Faserverbundkunststoff-Oberfläche führt. Es kann so zu einer Ablösung der Funktionsschicht vom Bauteil kommen. Umgekehrt kommt es bei einer gründlichen Oberflächenaktivierung nicht nur zur Aufrauhung des Polymermatrixmaterials, sondern teilweise zu erheblichen Schädigungen und Defekten in der faserverstärkten Kunststoffoberfläche. Die spröden Faserfilamente werden teilweise durch das einfallende Strahlgut stark beschädigt und abgetragen. Die mechanische Festigkeit des faserverstärkten Kunststoffbauteils nimmt dadurch ab.

Häufig wird durch dieses Verfahren keine ausreichend hohe Haftfestigkeit zwischen der Funktionsschicht und dem faserverstärkten Kunststoffsubstrat erreicht. Grund hierfür sind unter Anderem die sehr unterschiedlichen chemischen und thermophysikalischen Eigenschaften der Werkstoffe. Als Werkstoffe werden zum einen ein Polymermatrixverbund als Substrat verwendet und zum anderen als Beschichtung eine metallische, keramische oder cermetische Schicht. Eine Haftung zwischen diesen Schichten ist vor allem durch eine beim Auftragen erzeugte mechanische Verhakung der Oberflächen bedingt.

Daneben werden beim thermischen Spritzen prozessbedingt erhebliche Schädigungen in das Substrat infolge der Aktivierungs- und Beschichtungsprozesse eingebracht, wodurch die mechanische Leistungsfähigkeit des Verbundes leidet.

Ein weiterer Nachteil dieses Verfahrens liegt in den hohen Prozesstemperaturen und der teilweise sehr hohen kinetischen Energie während der Beschichtung (Schritt 4). Bei diesem Schritt kommt die temperaturempfindliche Polymermatrix (beispielsweise Epoxidharz) mit schmelzflüssigen Metallen bzw. Keramiktropfen mit teilweise sehr hoher Geschwindigkeit in Kontakt. Auch dieser Schritt wirkt sich negativ auf den Faserverbundwerkstoff aus. Hierbei wird insbesondere das Polymermatrixmaterial infolge der thermischen und kinetischen Einwirkung geschädigt. In Folge dessen kommt es zu Zersetzungsreaktionen an der Polymeroberfläche. Auch eine intensive Kühlung, die wiederrum zu einer Erhöhung der Kosten führt, liefert nicht die gewünschten Ergebnisse. Ebenfalls führen die unterschiedlichen Wärmeausdehnungskoeffizienten von faserverstärktem Kunststoff und Funktionsschicht zur Ausbildung hoher Eigenspannungen. Hierdurch wird die Lebensdauer des Bauteils reduziert. Ferner kann es sogar zum Versagen des Schichtverbundes ohne externe Krafteinwirkung kommen.

Neuere Forschungsansätze versuchen die Haftfestigkeit zu verbessern, indem metallische Phasen direkt in die faserverstärkten Kunststoffbauteile eingebracht werden. Dies geschieht entweder in Form von metallischen Pulverpartikeln in der Polymermatrix oder in Form von metallischen Fasern als oberste Faserlage, wodurch die Anbindung der anschließend aufgebrachten Funktionsschicht begünstigt werden soll. Auch diese Ansätze lösen die oben genannten Mängel nicht vollständig.

Vor diesem Hintergrund liegt der Erfindung die Aufgabe zugrunde, ein Verfahren zum Herstellen von Verbundwerkstoff-Bauteilen zu offenbaren, welches eine Herstellung von hochwertigen, beschichteten Leichtbauteilen auf möglichst einfache Weise ermöglicht.

Diese Aufgabe wird erfindungsgemäß durch ein Verfahren zur Herstellung eines Verbundwerkstoff-Bauteils mit den folgenden Schritten gelöst:
(a) Bereitstellung einer Negativform;
(b) Applizieren zumindest einer Funktionsschicht mittels thermischen Spritzens auf die Negativform;
(c) Applizieren zumindest einer faserverstärkten Kunststoffschicht mit einem aushärtbaren Matrixwerkstoff;
(d) Aushärtung des Matrixwerkstoffs; und
(e) Ablösen des Verbundwerkstoff-Bauteils von der Negativform, um ein Verbundwerkstoff-Bauteil zu erhalten.

Die Aufgabe der Erfindung wird auf diese Weise vollkommen gelöst.

Erfindungsgemäß werden die Belastungen, die durch die Oberflächenaktivierung und die Beschichtung auf der faserverstärkten Kunststoffschicht nach dem konventionellen Verfahren auftreten, vollständig vermieden. Gemäß dem erfindungsgemäßen Verfahren kommt es weder zu thermischen noch zu mechanischen Schäden in der faserverstärkten Kunststoffschicht. Dies wird durch eine Umkehrung der Reihenfolge der Prozessschritte erreicht.

Mit dem erfindungsgemäßen Verfahren wird somit eine neue Herstellungsroute bereitgestellt, die es ermöglicht, zuverlässig Faserverbund-Kunststoffe mit thermischen Spitzenschichten zu versehen.

Diese beschichteten Faserverbund-Kunststoffe finden zahlreiche Anwendungsmöglichkeiten. Es lassen sich Bauteile herstellen, die temperaturbeständig und/oder korrosionsbeständig sind, sowie vorteilhafte tribologische Eigenschaften aufweisen. Darüber hinaus sind solche Bauteile besonders leicht, aufgrund der faserverstärkten Kunststoffschicht. Derartige Bauteile können daher beispielsweise als Walzen in der Papierindustrie oder als CFK-Felgen zum Einsatz kommen. Solche Felgen können sowohl im Fahrrad als auch im PKW verbaut werden. Derartige Felgen können bei Fahrrädern eine beschichtete Bremsfläche aufweisen. Als PKW-Felge könnte das Felgenbett zum thermischen Schutz gegen eine heiße Bremsscheibe beschichtet sein. Weitere Anwendungsfelder sind beispielsweise der Automobilbau, wobei die erfindungsgemäßen Bauteile beispielsweise als Steinschlagschutz im Unterbau des Fahrzeugs verbaut werden können. Weitere Anwendungen können beispielsweise Wärmedämmschichten etc. sein. Erfindungsgemäß lassen sich zahlreiche Formen herstellen. Neben den flachen Formen sind auch gebogene, gewellte aber auch zylindrische und Vieleck-Profile herstellbar. Auf diese Weise lassen sich beispielsweise innenbeschichtete Rohre herstellen.

Erfindungsgemäß werden im Bauteil besonders gute Haftfestigkeiten zwischen den einzelnen Schichten erreicht. Spritzschichten, die auf konventionellem Weg auf faserverstärkte Kunststoffe appliziert werden, weisen Haftfestigkeiten im Bereich von ca. 2 - 9 MPa auf. Nach dem erfindungsgemäßen Verfahren wurden dagegen Verbundwerkstoffbauteile hergestellt, die eine Haftfestigkeit von > 10 MPa aufweisen.

Durch das Umkehren der Prozessschritte kommt es ferner zu einer verbesserten vorteilhaften Adhäsion zwischen der Funktionsschicht und der faserverstärkten Kunststoffschicht. Die Funktionsschicht weist aufgrund des Applikationsverfahrens eine raue Oberfläche auf, in die der niedrig viskose Matrixwerkstoff eindringen und aushärten kann. Eine derartige Mikroverklammerung wirkt sich positiv auf die Haftfestigkeit zwischen den einzelnen Schichten aus. Dies lässt sich nicht durch das konventionelle Verfahren erreichen. Bei dem herkömmlichen Verfahren dringen insbesondere die noch schmelzflüssigen Funktionsschichtpartikel in die aufgeraute Oberfläche des faserverstärkten Kunststoffs ein.

Erfindungsgemäß weisen die Schichten, die mittels thermischen Spritzens appliziert werden, eine "generierte" bzw. "aktive" Rauigkeit auf. Diese Oberflächenrauheit wird in Folge des thermischen Spritzprozesses erreicht. Beim konventionellen Verfahren muss dagegen zunächst eine geeignete Oberflächenrauheit hergestellt werden, beispielsweise durch Sandstrahlen etc., damit eine nachfolgende Spritzbeschichtung haftet. Es handelt sich hierbei also um eine "notwendige" bzw. "passive" Rauigkeit der Oberfläche.

Erfindungsgemäß enthält das Verbundwerkstoff-Bauteil zumindest zwei Schichten, nämlich die Funktionsschicht und die faserverstärkte Kunststoffschicht. Die Oberflächenstruktur des Verbundwerkstoff-Bauteils auf der Seite der Funktionsschicht wird aus der Abbildung der Negativform gebildet. Es wird eine glatte "net-shape" Oberfläche auf dem Verbundwerkstoffbauteil erreicht. Hierdurch können sowohl besonders glatte Oberflächenstrukturen hergestellt werden, als auch Oberflächenstrukturen, die Maserungen bzw. Muster aufweisen. Die Oberflächenstruktur des Verbundwerkstoff-Bauteils auf der Seite der faserverstärkten Kunststoffschicht wird primär durch das Applizierungsverfahren der faserverstärkten Kunststoffschicht mit einem aushärtbaren Matrixwerkstoff bestimmt.

Mit dem erfindungsgemäßen Verfahren können Verbundwerkstoff-Bauteile hergestellt werden, die im Gegensatz zu den herkömmlichen Bauteilen keine Schädigungen zwischen den Schichten aufweisen, beispielsweise ausgelöst durch Oberflächenaktivierungen oder thermisches Spritzen.

Erfindungsgemäß handelt es sich bei einer "Funktionsschicht" um eine Beschichtung, die dem Verbundwerkstoff-Bauteil besondere Eigenschaften für unterschiedliche Anwendungen verleiht. Beispiele für mögliche Anwendungen können Korrosionsschutz, Verschleiß-Schutz, Erstellung von Gleitschichten, elektrische Kontaktierung oder Isolation, thermische Isolation etc. sein. Mögliche Materialien, die als Beschichtung dienen können, sind beispielsweise metallische Werkstoffe oder Verbundmaterialien, wie etwa Cermets oder Keramiken, die dazu dienen, dem Verbundwerkstoff-Bauteil besondere Eigenschaften zu verleihen. Zur Erstellung von Korrosionsschutzschichten eignen sich beispielsweise chemisch beständige Werkstoffe. Insbesondere zur Verwendung als Verschleissschutz werden abriebfeste Materialien verwendet, die gegenüber Stößen, Abrasionen, Erosionen und Kavitationen beständig sind.

Erfindungsgemäß handelt es sich bei dem thermischen Spritzen um ein Verfahren, welches gemäß der DIN EN 657 folgendermaßen definiert wird: "Das thermische Spritzen umfasst Verfahren, bei denen Spritzzusätze innerhalb oder außerhalb von Spritzgeräten an-, auf- oder abgeschmolzen und auf vorbereitete Oberflächen aufgeschleudert werden. Die Oberflächen werden dabei nicht aufgeschmolzen." Je nach Verfahren werden dabei unterschiedliche Temperaturen als auch Spritzgeschwindigkeiten erreicht, die den Beschichtungsprozess maßgeblich charakterisieren. Das Beschichtungsmaterial wird in einer Flamme, einem Plasma, einem Lichtbogen oder bei metallischen Werkstoffen auch durch Induktionsspulen bis über den Schmelzpunkt hinaus erwärmt. Dabei bilden sich feine Tröpfchen, welche anschließend auf eine Oberfläche gesprüht werden. Eine Zuführung des Spritzwerkstoffes zum Spritzsystem erfolgt dabei als Draht, Stab, Pulver, Schnur, Suspension oder bei speziellen Verfahren bereits als geschmolzenes Material.

Erfindungsgemäß wird unter "faserverstärkter Kunststoffschicht" eine Schicht verstanden, welche aus einem aushärtbaren Matrixwerkstoff besteht, der mit Fasern verstärkt ist. Nach einer Aushärtung des Matrixwerkstoffs liegt die faserverstärkte Kunststoffschicht als faserverstärkter Kunststoff vor. Als Fasern können jegliche Fasern Verwendung finden, die dem ausgehärteten Kunststoff die nötige Festigkeit und Steifigkeit verleihen. Die einzelnen Fasern können beispielsweise als Garn in einem Bündel in sogenannten Rovings zusammengefasst werden. Dies kann das Applizieren der Fasern erleichtern. Darüberhinaus können die einzelnen Faserfilamente auch durch Bearbeitung, wie beispielsweise Weben, Flechten oder Sticken, zu Halbzeugen verarbeitet werden. Beispiele für Halbzeuge können Gewebe, Gelege, Gesticke, Geflechte, Matten, Vliesstoffe, Feinschnitte, Abstandsgewebe etc. sein. Bei der Bearbeitung der Fasern können die Fasern zusätzlich mit einer Schutzschicht, der so genannten Schlichte, versehen werden. Diese Schlichte kann eine verbesserte Haftung zwischen der Faser und der Matrix unterstützen.

Erfindungsgemäß werden unter "Fasern" sowohl einzelne Fasern, die in einer oder mehreren Schichten appliziert werden können, als auch bearbeitete Fasern, die als Garne zusammengefasst werden können, als auch Halbzeuge auf Basis von Fasern bzw. Garnen von Fasern verstanden.

Bei den Fasern kann es sich ferner um Kurz-, Lang- oder Endlosfasern handeln, die im Matrixwerkstoff statistisch verteilt sein können oder die in bestimmter Weise gerichtet angeordnet sein können, um bestimmte, richtungsabhängige Eigenschaften zu erzielen.

Erfindungsgemäß handelt es sich bei dem "aushärtbaren Matrixwerkstoff" um einen Werkstoff, welcher ausgehärtet einen Kunststoff bildet. Der Matrixwerkstoff schützt die Fasern, gibt dem Bauteil seine Form und überträgt auftretende Kräfte auf die Fasern. Als Matrixwerkstoff können Thermoplaste, Duroplaste sowie Elastomere verwendet werden. Die Matrix umgibt die Fasern in der faserverstärkten Kunststoffschicht, so dass die Fasern mittels Adhäsiv- oder Kohäsivkräften an die Matrix gebunden werden. Je nach verwendeter Matrix weist der entstehende faserverstärkte Kunststoff unterschiedliche Eigenschaften auf. Beispielsweise können so die Elastizität, der Temperatureinsatzbereich, die Medienbeständigkeit (sauer, basisch), die Strahlungsbeständigkeit (UV-Strahlung), das Langzeitverhalten (Kriechen, Relaxation), die Feuchteaufnahme etc. vorteilhaft eingestellt werden.

Je nach Anwendung werden ein geeigneter Matrixwerkstoff und eine geeignete Faserart in Kombination ausgewählt, um ein geeignetes Verbundwerkstoff-Bauteil zu erhalten.

Erfindungsgemäß bedeutet "Aushärten", dass sich flüchtige Stoffe, die sich in dem Matrixwerkstoff befinden, verflüchtigen und sich die Matrix vollständig vernetzen kann. Beim Aushärten kommt es zu zahlreichen chemischen Reaktionen, wie beispielsweise zu polymeren Kettenreaktionen oder Kondensationsreaktionen. Im flüssigen Zustand kann der Matrixwerkstoff in die darunterliegende Schicht eindringen. Bei der Aushärtung des Matrixwerkstoffs kommt es dann zu einer physikalisch mechanischen Bindung, der sogenannten Mikroverklammerung. Umso rauer die Oberfläche, in die der Matrixwerkstoff eindringen kann, umso besser ist die Adhäsion zwischen den beiden Schichten. Eine Aushärtung kann beispielsweise mittels Erwärmung, speziellen Zusätzen innerhalb des Matrixwerkstoff und erhöhtem Druck beschleunigt werden.

In bevorzugter Weiterbildung der Erfindung wird nach dem Schritt (b) und vor dem Schritt (c) eine Haftvermittlerschicht appliziert, bevorzugt mittels thermischen Spritzens.

Erfindungsgemäß handelt es sich bei der "Haftvermittlerschicht" um eine zusätzliche Schicht, welche sich unter Umständen im Material von der Funktionsschicht als auch von der faserverstärkten Kunststoffschicht unterscheidet. Die Haftvermittlerschicht dient dazu, die Funktionsschicht und die faserverstärkte Kunststoffschicht stoffschlüssig mittels einer hochadhäsiven Bindung zusammenzuhalten. Welcher Werkstoff als geeigneter Haftvermittler in Betracht kommt, hängt einerseits von der Art der Funktionsschicht und der faserverstärkten Kunststoffschicht ab, und andererseits vom jeweiligen Anwendungsfall ab. Wie die Funktionsschicht, sowie die faserverstärkten Kunststoffschicht, muss auch die Haftvermittlerschicht aufeinander abgestimmt sein. Die Haftvermittlerschicht ist nicht zu verwechseln mit einer Schlichte, die eine verbesserte Haftung zwischen Faser und Matrix herstellen kann.

Durch das Applizieren einer Haftvermittlerschicht zwischen der Funktionsschicht und der faserverstärkten Kunststoffschicht auf die Negativform können sich bessere Hafteigenschaften zwischen den verschiedenen Schichten ergeben. Ein Ablösen der einzelnen Schichten kann hierdurch größtenteils vermieden werden. Ferner können durch die zusätzliche Schicht weitere vorteilhafte Eigenschaften eingestellt werden. Die Eigenschaften ergeben sich aus den Werkstoffen, die als Haftvermittler verwendet werden. Beispielsweise kann ein erhöhter Abrasivschutz durch die Verwendung von Metallen bzw. Metalllegierungen erreicht werden.

Durch das erfindungsgemäße Verfahren ist es nicht notwendig, die Funktionsschicht, welche unter der Haftvermittlerschicht liegt, vorzubehandeln, damit die Haftvermittlerschicht auf der Funktionsschicht haftet. Ferner wird erfindungsgemäß eine Beschädigung des faserverstärkten Kunststoffs vermieden.

Die Haftvermittlerschicht besteht in bevorzugter Weiterbildung der Erfindung aus einem Metall und/oder einer Metalllegierung, insbesondere aus Aluminium, Nickel, Stahl, Zink, Titan, Molybdän, Chrom, Kobalt, Silizium, Legierungen und/oder Mischungen davon.

Als besonders bevorzugte Haftvermittlerschicht eignet sich Aluminium.

Sofern als Haftvermittlerschicht eine Schicht aus einem gut wärmeleitfähigem Metall, wie etwa Aluminium verwendet wird, ergibt sich als weiterer Vorteil, dass sich eine verbesserte Wärmeverteilung über das gesamte Verbundwerkstoff-Bauteil ergibt, was insbesondere bei bestimmten Anwendungen mit thermischer Beanspruchung vorteilhaft ist.

Vorzugsweise wird die Funktionsschicht und/oder die Haftvermittlerschicht mit einer Dicke von 20 bis 1000 µm appliziert, bevorzugt mit einer Dicke von 50 bis 500 µm, insbesondere bevorzugt mit einer Dicke von 100 bis 200 µm.

Die Schichtdicke bestimmt die Eigenschaften des fertigen Verbundwerkstoff-Bauteils maßgeblich mit. Das Applizieren von besonders dünnen Schichten bietet beispielsweise besondere Vorteile bezüglich des Gewichts und der Eigenspannungsverteilung im Verbund. Für die Anwendung im Leichtbauwesen sind besonders leichte Bauteile bevorzugt; also solche mit dünnen Schichten, die trotz ihrer dünnen Schichtdicke die gewünschten Eigenschaften mit sich bringen. Vorteilhaft wirken sich dünne Schichtdicken auch auf die Kosten aus. Derartige Schichten werden erfindungsgemäß bevorzugt mittels thermischen Spritzens aufgetragen.

Gemäß einer weiteren Ausgestaltung der Erfindung wird die Negativform feinbearbeitet, insbesondere poliert, geschliffen und/oder geläppt.

Die Feinbearbeitung ermöglicht eine vereinfachte Ablösung des Verbundwerkstoff-Bauteils von der Negativform. Je glatter die Negativform ist, desto besser lässt sich das Verbundwerkstoff-Bauteil von der Negativform lösen. Ferner bietet diese Ausgestaltung den Vorteil, dass das Verbundwerkstoff-Bauteil auf der Seite der Funktionsschicht eine besonders geringe Oberflächenrauheit aufweist, da die Negativform auf dem Verbundwerkstoff-Bauteil bzw. der Funktionsschicht abgebildet wird und diese durch die Feinbearbeitung zuvor geglättet wurde. Eine derartige Oberflächenrauheit ist nach dem Stand der Technik lediglich durch aufwändiges und kostenintensives Nachbehandeln möglich.

Erfindungsgemäß lässt sich das Verbundwerkstoff-Bauteil insbesondere dann gut ablösen, wenn die Oberfläche der Negativform einen Oberflächenkennwert von Sₐ ≤ 3.5 µm und vorzugsweise S_{z} ≤ 50 µm aufweist, insbesondere von Sₐ ≤ 2.5 µm und S_{z} ≤ 40 µm. Derartige Oberflächenrauheiten können nach den oben genannten Feinbearbeitungsschritten erreicht werden.

Gemäß einer weiteren Ausführung der Erfindung wird die Negativform aus einem Material hergestellt, das aus der Gruppe ausgewählt wird, die aus Metallen, Metalllegierungen, Kunststoffen, Keramiken, Salz oder Glas besteht.

Diese Materialien sind geeignet, um eine Beschichtung mit einer Funktionsschicht mittels thermischen Spritzens zu erlauben, ohne selber dabei Schaden zu nehmen. Beim Verfahrensschritt des thermischen Spritzens werden hohe Temperaturen von bis zu über 2000°C erreicht. Ferner bieten die Materialien den Vorteil, dass sie ein Ablösen des Verbundwerkstoff-Bauteils erleichtern. Dabei sind diese Materialien so beschaffen, dass eine mögliche Reaktion zwischen der Funktionsschicht und der Negativform minimiert wird. Ferner lassen sich die Negativformen mittels der oben genannten Materialen leicht und kostengünstig herstellen, was das Verfahren insgesamt vereinfacht.

Das Material der Negativform wird bevorzugt an die Funktionsschicht angepasst. Die Negativform weist bevorzugt eine geringe Haftung auf, jedoch eine nicht zu geringe Haftung, so dass ein Schichtaufbau möglich ist. Die Haftung zwischen der Negativform und der Funktionsschicht wird primär durch Van-der-Waals Kräfte erreicht. Somit sollte ein Material verwendet werden, bei dem die Funktionsschicht keine Reaktionen mit der Negativform eingeht. Bevorzugt sind somit Stoffe, die chemisch inert sind gegenüber den Materialien, die als Funktionsschicht verwendet werden.

Erfindungsgemäß können beispielsweise temperaturbeständige Kunststoffe verwendet werden. Beispiele dieser Kunststoffe sind Polyetheretherketon (PEEK) oder Polyoxymethylen (POM). Des Weiteren können Gläser verwendet werden, insbesondere temperaturbeständige Gläser, wie etwa Borosilikatgläser.

Einen besonderen Vorteil bieten Negativformen aus Salz. Hierbei handelt es sich um Salzkerne, die auch in der Gießereitechnik Verwendung finden. Diese Salzkerne können beispielsweise aus Gemischen aus verschiedenen Salzen wie Natriumcarbonat (Na₂CO₃) und Natriumchlorid (NaCl) bestehen. Eine Negativform aus Salz kann nach der Herstellung des Verbundwerkstoffbauteils einfach ausgespült werden. Hierdurch kann der Verfahrensschritt der Ablösung erleichtert werden.

Die Negativform weist bevorzugt eine rotationssymmetrische Form auf, insbesondere in Form eines Zylinders, weiter bevorzugt eine konische rotationssymmetrische Form.

Diese Ausführungsform bietet den Vorteil, dass durch eine rotationssymmetrische Form der Negativform ein innen beschichtetes Rohr hergestellt werden kann. Ferner wird durch eine konische rotationssymmetrische Form das Ablösen des Verbundwerkstoff-Bauteils nach dessen vollständiger Herstellung erleichtert. Bevorzugt ist hierbei eine Konusneigung von 0,05° bis 10°, weiter bevorzugt von 0,1° bis 1°.

Beim Applizieren der faserverstärkten Kunststoffschicht kann ferner eine Druckspannung erzeugt werden (indem etwa eine Faserschicht mit einer gewissen Zugspannung gewickelt wird), die von außen auf die innenliegende, thermisch gespritzte Funktionsschicht wirkt. Auf diese Weise wird die auf Zugspannung empfindliche Funktionsschicht mit Druck vorgespannt, so dass sich insgesamt eine deutlich höhere Festigkeit, eine höhere Schadenstoleranz und selbststärkender Effekte des fertigen Verbundwerkstoff-Bauteils ergeben.

In einer weiteren bevorzugten Ausgestaltung wird als Funktionsschicht eine Metallschicht, eine Keramikschicht und/oder Cermetschicht appliziert.

Durch die Wahl der Materialien, die als Funktionsschicht appliziert werden, erhält das Verbundwerkstoff-Bauteil seine besonderen Materialeigenschaften. Mittels der genannten Funktionsschichten können tribologisch, thermisch und/oder korrosiv hoch belastbare Verbundwerkstoff-Bauteile hergestellt werden. Dabei kann die Funktionsschicht eine Schutzschicht für die faserverstärkte Kunststoffschicht bilden.

Gemäß einer weiteren Ausgestaltung der Erfindung wird das Applizieren der Funktionsschicht und/oder das Applizieren der Haftvermittlerschicht mittels thermischen Spritzens durchgeführt, das aus der Gruppe ausgewählt wird, die aus Schmelzbadspritzen, Lichtbogenspritzen, Plasmaspritzen, Flammspritzen, Hochgeschwindigkeitsflammspritzen, Kaltgasspritzen, Drahtflammspritzen, Pulverflammspritzen, Detonationsspritzen, Suspensionsspritzen, Präkursorspritzen und Laserspritzen besteht.

Je nach Material, welches als Funktionsschicht oder Haftvermittlerschicht verwendet wird, bieten die genannten Verfahren gewisse Vorteile. Beispielsweise können durch das Lichtbogenspritzen elektrisch leitende Werkstoffe verspritzt werden.

Gemäß einer weiteren Ausgestaltung der Erfindung wird das Applizieren der faserverstärkten Kunststoffschicht mittels eines Verfahrens durchgeführt, das aus der Gruppe ausgewählt wird, die aus Handlaminieren, Faserspritzen, Pressen, Pultrusionsverfahren, Spritzguss, Radial-, Kreuz-, Polar-Faserwickelverfahren, Harzinjektionsverfahren und Autoklavverfahren besteht.

Gemäß einer weiteren Ausgestaltung der Erfindung sind die Fasern aus der Gruppe ausgewählt, die aus organischen Fasern, anorganischen Fasern, metallischen Fasern, Naturfasern und/oder Mischungen hieraus besteht.

Als Fasern können erfindungsgemäß Kohlenstofffasern, Glasfasern, Basaltfasern, Aramidfasern, Polyesterfasern, Polyethylenfasern, Nylonfasern, Siliziumcarbidfasern, Aluminiumoxidfasern, Mullitfasern, Borfasern, Wolframfasern, Borcarbidfasern, Bornitridfasern, Zirkonoxidfasern, Stahlfasern und/oder Mischungen dieser verwendet werden.

Je nach verwendeter Faserart kann eines der oben genannten Applizierverfahren von Vorteil sein. Die jeweils ausgewählte Faserart verleiht dem fertigen Verbundwerkstoff-Bauteil seine charakteristische Festigkeit sowie seine Elastizität.

Gemäß einer weiteren Ausgestaltung der Erfindung werden die Fasern in einem aushärtbaren Matrixwerkstoff getränkt.

Erfindungsgemäß können die Fasern beispielsweise vor dem Applizieren im aushärtbaren Matrixwerkstoff getränkt werden und somit als getränkte Fasern appliziert werden. Alternativ können die Fasern auch "trocken" appliziert werden und erst im Anschluss mit dem aushärtbaren Matrixwerkstoff getränkt werden. Ferner können auch Fasern mit dem Matrixwerkstoff gemischt werden. Beispielsweise können Kurzfasern im Matrixwerkstoff vermischt werden und zusammen appliziert werden. Je nach Faserart kann eine der Alternativen von Vorteil sein. Beispielsweise können besonders lange Fasern während des Applizierens durch ein Bad aus Matrixwerkstoff gezogen werden und anschließend auf die Negativform gewickelt werden.

Gemäß einer weiteren Ausgestaltung der Erfindung ist der Matrixwerkstoff ein Harz.

Harze, die erfindungsgemäß eingesetzt werden können, sind beispielsweise Epoxidharze, ungesättigte Polyesterharze, Vinylesterharze, Phenol-Formaldehydharze, Diallylphthalatharze, Methacrylatharze, Polyurethanharze, Aminoharze, insbesondere Melaminharze, Harnstoffharze, Geopolymere, Benzoxazinharze, Phenolharze, Bismaleinimid-Harze, Polyimid-Harze, Cyanester-Harze und/oder Silizium-Polymere, wie beispielsweise Polysilane, Polycarbosilane oder Polytitanosilane. Diese Harze bieten den Vorteil, dass sie aushärtbar sind und sich gut mit der Faser verbinden können. Ferner bieten sie den Vorteil, besonders widerstandsfähig zu sein.

Erfindungsgemäß können die Harze ferner Füllstoffe aufweisen. Füllstoffe sind Zusatzstoffe, die bestimmte Eigenschaften der Harze verändern, beispielsweise die Härte und Abriebfestigkeit, die chemischen, mechanischen, thermischen und elektrischen Eigenschaften. Die Vernetzung der Harze sollte möglichst nicht durch die Zugabe von Füllstoffen behindert werden. Füllstoffe unterscheiden sich in ihrer Zusammensetzung, Struktur und Dichte.

Füllstoffe, die erfindungsgemäß eingesetzt werden können, sind beispielsweise organische Füllstoffe (z.B. Naturfasern wie Baumwolle, Jute, Hanf, Sisal etc.), anorganische Füllstoffe (z.B. Glasfasern, Glashohlkugeln, Metallpulver etc.), faserförmige Füllstoffe (z.B. Glasfaserschnitzel, Baumwollflocken), pulverförmige Füllstoffe (z.B. Quarzmehl, Talkum, Kreide etc.), Thixotropiermittel, Farbpigmente und/oder Flammschutzmittel.

Gemäß einer weiteren Ausgestaltung der Erfindung wird die faserverstärkte Kunststoffschicht mit einer Dicke von ≥ 500 µm appliziert, bevorzugt von ≥ 700 µm, insbesondere bevorzugt von ≥ 900 µm, wobei die Dicke bevorzugt höchstens 5 cm ist.

Durch das Applizieren von besonders dünnen Kunststoffschichten können besonders leichte Verbundwerkstoff-Bauteile hergestellt werden. Diese können beispielsweise im Automobil-, Fahrzeug- und Maschenbau eingesetzt werden. Je nach Anforderungsprofil des Verbundwerkstoff-Bauteils kann auch eine dickere Kunststoffschicht bevorzugt sein, wodurch sich etwa eine erhöhte Festigkeit ergeben kann.

Mittels des erfindungsgemäßen Verfahrens können insbesondere lange und leichte, innenbeschichtete Rohre hergestellt werden. Diese können generell einen Durchmesser von wenigen Millimetern bis zu einigen Metern aufweisen. Eine mögliche Verwendung ist ein Einsatz als Förderrohr, beispielsweise zur Förderung von Flüssigbeton. Hierbei wird eine erhebliche Gewichtseinsparung im Vergleich zu den im Stand der Technik verwendeten Stahlrohren erreicht.

Gemäß einer weiteren Ausgestaltung der Erfindung wird die Negativform gekühlt, um das Ablösen des Verbundwerkstoff-Bauteils zu unterstützen.

Durch das Abkühlen der Negativform zieht sich das Material dieser zusammen, sodass eine Lücke zwischen der Funktionsschicht des Verbundwerkstoff-Bauteils und der Oberfläche der Negativform entsteht. Durch einfaches Abziehen kann somit das Verbundwerkstoff-Bauteil erhalten werden. Eine Kühlung kann beispielsweise mittels Kohlenstoffdioxid oder flüssigem Stickstoff durchgeführt werden.

Gemäß einer weiteren Ausgestaltung der Erfindung wird nach dem Schritt (d) oder nach dem Schritt (e) eine Elastomerschicht appliziert.

Diese Schicht kann beispielsweise aus Gummi, Kautschuk, Polyurethan, Polyurea etc. bestehen. Erfindungsgemäß kann die Elastomerschicht vor oder nach dem Ablösen des Verbundwerksoff-Bauteils appliziert werden. Diese Schicht bietet den Vorteil, dass diese das fertige Verbundwerkstoff-Bauteil beispielsweise vor Stoßbelastungen schützen kann. Eine mögliche Anwendung sind beispielsweise Betonförderrohre auf Baustellen.

Gemäß einer weiteren Ausgestaltung der Erfindung wird vor dem Schritt (b) ein Verbindungselement auf die Negativform angebracht oder vor dem Schritt (c) ein Verbindungselement auf die beschichtete Negativform angebracht.

Bei dem "Verbindungselement" kann es sich beispielsweise um Flansche, Kupplungen und Anbindungsteile handeln. Diese können beispielsweise aus Metallen wie Stahl, Aluminium und Titan bestehen. Mittels dieser Ausgestaltung können Verbundwerkstoff-Bauteile hergestellt werden, die mit weiteren Bauteilen verbunden werden können. Beispielsweise können Rohre, die nach dem erfindungsgemäßen Verfahren hergestellt wurden, mittels Flanschen verbunden und abgedichtet werden.

Erfindungsgemäß können die Verbindungselemente bereits auf der Negativform vorliegen, so dass diese innerhalb des erfindungsgemäßen Verfahrens zumindest teilweise mitbeschichtet werden. Ferner können die Verbindungselemente nach der Erzeugung der thermisch gespritzten Beschichtung (Funktionsschicht oder Haftvermittlerschicht) an der Negativform angebracht werden. Hierbei wird das Verbindungselement in der faserverstärkten Kunststoffschicht zumindest teilweise eingeschlossen. Besonders bevorzugt ist das Anbringen der Verbindungselemente an den Enden der Negativform. Dabei werden Verbundwerkstoff-Bauteile hergestellt, welche leichter an den jeweiligen Enden miteinander verbunden werden können.

Die Aufgabe wird erfindungsgemäß auch durch ein Verbundwerkstoff-Bauteil mit einer thermisch gespritzten Funktionsschicht und einer faserverstärkten Kunststoffschicht gelöst, bei dem die thermisch gespritzte Funktionsschicht einen Oberflächenkennwert von Sₐ ≤ 3.5 µm und S_{z} ≤ 50 µm aufweist, insbesondere von Sₐ ≤ 2.5 µm und S_{z} ≤ 40 µm, welches vorzugsweise nach dem oben beschriebenen Verfahren hergestellt wird, wobei es sich bevorzugt um ein innenbeschichtetes Rohr handelt, bevorzugt mit einem Innendurchmesser von ≤ 1000 mm, weiter bevorzugt von ≤ 500 mm, ≤ 200 mm, weiter vorzugsweise mit einem Innendurchmesser von ≥ 10 mm.

Die Aufgabe der Erfindung wird auch auf diese Weise vollkommen gelöst.

Bei den Oberflächenkennwerten Sₐ und S_{z} handelt es sich um Kenngrößen, die Informationen über die Oberflächenbeschaffenheit bzw. Rauheit geben können. Bei den beiden Größen handelt es sich um 3D-Amplitudenkenngrößen. Bei dem Wert Sₐ handelt es sich um den arithmetischen Mittelwert, wohingegen der S_{z}-Wert die maximale Höhe der Oberflächentextur wiedergibt.

Die Oberflächenrauheit der gespritzten Funktionsschicht wird maßgeblich durch die Negativform und dem verwendeten Werkstoff der Funktionsschicht bestimmt. Je nach Beschaffenheit der Negativform wird diese auf der Funktionsschicht abgebildet. Derartig glatte Oberflächen sind nach dem im Stand der Technik bekannten Verfahren entweder gar nicht oder nur mit sehr hohem Aufwand herstellbar.

Erfindungsgemäß können ferner sehr lange innenbeschichtete Rohre mit einem geringen Durchmesser hergestellt werden. Gemäß dem Stand der Technik ist es lediglich möglich, innenbeschichtete Rohre mithilfe einer Beschichtungslanze bzw. mittels eines Innenbrenners bzw. eines Beschichtungsroboters herzustellen. Diese Verfahren sind hinsichtlich der Länge und des Durchmessers des herzustellenden Rohres beschränkt. Ferner können gemäß dem Stand der Technik keine Rohre mit einer besonders glatten Funktionsschicht auf der Innenoberfläche hergestellt werden, da keine geeigneten Bearbeitungsverfahren zur mechanischen Bearbeitung der Innenoberfläche von dünnen Rohren bekannt sind. Das erfindungsgemäße Verfahren dagegen ermöglicht unter anderem die Herstellung sowohl besonders dünner, als auch besonders glatter, innenbeschichteter Rohre.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: den grundsätzlichen Verfahrensablauf bei der Herstellung von Verbundwerkstoff-Bauteilen nach dem erfindungsgemäßen Verfahren;
- Figur 2: zwei nach dem erfindungsgemäßen Verfahren hergestellte Verbundwerkstoff-Bauteile;
- Figur 3: eine Faser-Wickelapparatur;
- Figur 4: eine Lichtmikroskopie-Aufnahme eines Querschnitts eines nach dem Stand der Technik hergestellten, beschichteten, faserverstärkten Kunststoffs; und
- Figur 5: eine REM-Aufnahme eines Querschnitts eines erfindungsgemäß hergestellten Verbundwerkstoff-Bauteils.

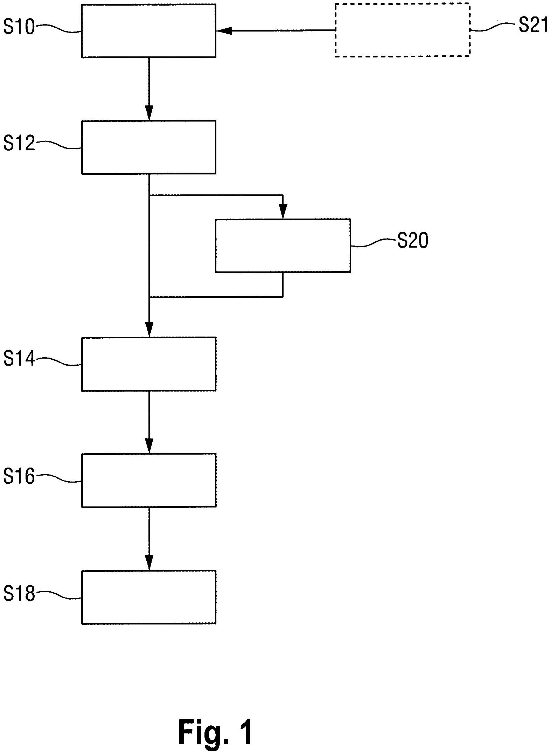

Die grundsätzlichen Schritte des erfindungsgemäßen Verfahrens zur Herstellung eines Verbundwerkstoff-Bauteils sind in Fig. 1 schematisch dargestellt. Es handelt sich um ein fünfstufiges Verfahren (S10, S12, S14, S16 und S18). Dieses Verfahren kann durch weitere Verfahrensschritte (S21, S20) erweitert werden. Bei dem Verbundwerkstoff-Bauteil handelt es sich um einen faserverstärkten Kunststoff, welcher mit einer Beschichtung, der Funktionsschicht, versehen ist.

In der ersten Stufe S10 wird eine Negativform bereitgestellt. Hierbei kann es sich um eine rotationssymmetrische Form handeln. Andere Formen, wie beispielsweise mehrseitige Polyeder, sind gleichfalls möglich. In einer weiteren bevorzugten Ausgestaltung handelt es sich bei der Negativform um eine konische Form. Diese Formen erleichtern das spätere Ablösen von der Negativform im Schritt S18. Die Negativform bestimmt maßgeblich die Form des fertigen Verbundwerkstoff-Bauteils. Handelt es sich beispielsweise bei der Negativform um einen Zylinder, kann ein Verbundwerkstoff-Bauteil in Form eines Rohres hergestellt werden. Flache Formen sind erfindungsgemäß auch möglich.

Die Oberfläche der Negativform bestimmt die Oberflächenstruktur und Rauheit der Funktionsschicht des Verbundwerkstoff-Bauteils, da diese Form abgebildet wird. Eine Musterung bzw. Maserung ist somit möglich.

In einem optionalen, dem Verfahren vorgeschalteten Schritt S21 (gestrichelter Kasten), wird die Negativform zuvor feinbearbeitet. Hierbei wird die Form etwa poliert, geschliffen oder geläppt. Diese Bearbeitung erleichtert das Ablösen in Schritt S18. Ferner kann auf diese Weise ein Verbundwerkstoff-Bauteil mit besonders glatter Funktionsschicht-Oberfläche hergestellt werden.

Die Materialien, aus denen die Negativform hergestellt werden kann, sind beispielsweise Metalle, Metalllegierungen, Kunststoffe, Keramiken, Salze oder Glas. Diese Materialien ermöglichen eine einfache und kostengünstige Herstellung der Negativformen. Die Materialien bieten ferner den Vorteil, dass sie genügend Haftung bieten, um die erfindungsgemäßen Schichten während des Verfahrens zu tragen bzw. darauf aufbauen zu können. Sie weisen bevorzugt jedoch nicht so viel Haftung auf, dass die Ablösung des Verbundwerkstoff-Bauteils erschwert wird. Aus diesem Grund wird das Material der Negativform an das Material der Funktionsschicht angepasst.

An den Schritt S10 anschließend erfolgt das Applizieren zumindest einer Funktionsschicht mittels thermischen Spritzens auf die Negativform (Schritt S12). Bei der Funktionsschicht kann es sich um eine Metallschicht, eine Keramikschicht und/oder Cermet-Schicht handeln.

Bei der Funktionsschicht handelt es sich um eine Beschichtung, die die darunterliegende Schicht/Schichten im fertigen Verbundwerkstoff-Bauteil vor äußeren Einflüssen schützt und diesem besondere Eigenschaften verleiht. Beispielsweise dient die Funktionsschicht dem Zweck des Korrosionsschutzes, des Verschleißschutzes etc.

Gemäß einem alternativen Verfahren kann zwischen dem Schritt S12 und S14 ein optionaler Verfahrensschritt S20 eingeführt werden. Hierbei wird eine Haftvermittlerschicht appliziert, bevorzugt mittels thermischen Spritzens. Die Haftvermittlerschicht dient dazu, die Funktionsschicht und die faserverstärkte Kunststoffschicht möglichst stoffschlüssig mittels einer hochadhäsiven Bindung zusammenzuhalten. Je nach Material der Funktionsschicht und der faserverstärkten Kunststoffschicht kann auf diesen Schritt verzichtet werden. Insbesondere dann, wenn die Funktionsschicht ausreichend stark an der faserverstärkten Kunststoffschicht haftet. Durch das erfindungsgemäße Verfahren kann eine weiter verbesserte Haftung durch das Eindringen des Matrixwerkstoffs in die äußeren Bereiche der Funktionsschicht erreicht werden.

Die Haftvermittlerschicht besteht aus Metallen oder einer Metalllegierung, insbesondere aus Aluminium, Nickel, Stahl, Zink, Titan, Molybdän, Chrom, Kobalt, Silizium, Legierungen und/oder Mischungen davon.

Es versteht sich, dass mehrere Funktionsschichten bzw. Haftvermittlerschichten übereinander appliziert werden können.

Appliziert wird die Funktionsschicht und gegebenenfalls die Haftvermittlerschicht mittels thermischen Spritzens. Hierbei wird das zu applizierende Material innerhalb oder außerhalb von Spritzgeräten an-, auf-, oder abgeschmolzen und auf die vorbereitete Oberfläche aufgeschleudert. Beispielsweise können Schmelzbadspritzen, Lichtbogenspritzen, Plasmaspritzen, Flammspritzen, Hochgeschwindigkeitsflammspritzen, Kaltgasspritzen, Drahtflammspritzen, Pulverflammspritzen, Detonationsspritzen, Suspensionsspritzen, Präkursorspritzen oder Laserspritzen zum Einsatz kommen.

Die Schichtdicke der thermisch gespritzten Schichten können zwischen 20 bis 1000 µm, bevorzugt zwischen 50 bis 500 µm, insbesondere bevorzugt zwischen 100 bis 200 µm liegen. Mittels des thermischen Spritzens lassen sich besonders feine und dünne Schichten auftragen.

Nachdem auf der Negativform zumindest eine Schicht appliziert wurde, wird in einem nächsten Verfahrensschritt S14 zumindest eine faserverstärkte Kunststoffschicht appliziert. Das Applizieren der faserverstärkten Kunststoffschicht kann auf die Funktionsschicht oder gegebenenfalls auf die Haftvermittlerschicht durchgeführt werden.

Bei den Fasern der faserverstärkten Kunststoffschicht kann es sich um organische Fasern, anorganische Fasern, metallische Fasern, Naturfasern und/oder Mischungen hieraus handeln, wohingegen der Matrixwerkstoff bevorzugt ein Harz ist. Bei den Fasern kann es sich ferner auch um bearbeitete Fasern handeln, also solche die gewebt, gelegt, gestickt oder geflochten wurden. Ferner kann es sich bei den Fasern auch um Halbzeuge, auf Basis von Fasern bzw. Garnen von Fasern, aber auch um Kurzfasern handeln.

Die Fasern können mittels Handlaminieren, Faserspritzen, Pressen, Pultrusionsverfahren, Spritzguss, Radial-, Kreuz-, Polar-Faserwickelverfahren, Harzinjektionsverfahren oder Autoklavverfahren auf die Funktionsschicht bzw. die Haftvermittlerschicht aufgetragen werden. Die Fasern können in einer alternativen Ausführungsform in einem aushärtbaren Matrixwerkstoff getränkt werden. Dies ermöglicht ein gleichzeitiges Auftragen von Fasern und Matrixwerkstoff. Alternativ kann die zuletzt aufgetragene Schicht (Haftvermittlerschicht oder Funktionsschicht) mit dem aushärtbaren Matrixwerkstoff getränkt werden. Im Anschluss können die Fasern appliziert werden, z.B. durch Aufwickeln, ggf. gefolgt von einem weiteren Tränkungsschritt. Je nach Faserart und Matrixwerkstoff kann eines dieser Tränkungsverfahren von Vorteil sein.

Aufgrund des flüssigen Aggregatzustandes des Matrixwerkstoffs kann dieser in die darunterliegende Schichten eindringen. Hierbei kommt es zu einer zusätzlichen Mikroverklammerung zwischen den Schichten, sodass hierdurch eine zusätzliche Adhäsion erreicht wird.

Ferner kann durch das verwendete Applizierungs-Verfahren in Schritt S14 das Spannungsverhältnis zwischen den einzelnen Schichten besonders bevorzugt eingestellt werden. Beim Applizieren der faserverstärkten Kunststoffschicht kann eine Druckspannung erzeugt werden (indem etwa eine Faserschicht mit einer gewissen Zugspannung gewickelt wird), die von außen auf die innenliegende, thermisch gespritzte Funktionsschicht wirkt. Auf diese Weise wird die auf Zugspannung empfindliche Funktionsschicht mit Druck vorgespannt, so dass sich insgesamt eine deutlich höhere Festigkeit des fertigen Verbundwerkstoff-Bauteils ergibt. Die beim Wickeln erzeugte Vorspannung wird beim späteren Aushärten des Matrixwerkstoffs in der faserverstärkten Kunststoffschicht fixiert und bleibt somit dauerhaft erhalten.

Die faserverstärkte Kunststoffschicht kann in einer Schichtdicke von ≥ 500 µm, bevorzugt von ≥ 700 µm, insbesondere bevorzugt von ca. ≥ 900 µm appliziert werden, wobei die Dicke bevorzugt höchstens 5 cm ist. Je nach Einsatzzweck des Verbundwerkstoff-Bauteils kann eine besonders dünne Schicht von Vorteil sein.

Nachdem zumindest zwei Schichten auf die Negativform appliziert wurden, folgt der Verfahrensschritt S16. Hierbei wird der Matrixwerkstoff ausgehärtet. Die Aushärtung kann beispielsweise durch erhöhte Temperaturen, durch spezielle Zusätze in dem Matrixwerkstoff oder durch erhöhte Drücke auf die faserverstärkte Kunststoffschicht unterstützt werden. Durch das Aushärten des Matrixwerkstoffs ergibt sich eine Mikroverklammerung in den Schichten, in die der Matrixwerkstoff eindringen konnte. Ferner werden die Fasern im Matrixwerkstoff fixiert.

In einem letzten Verfahrensschritt S18 wird das Verbundwerkstoff-Bauteil von der Negativform gelöst, um so das fertige Verbundwerkstoff-Bauteil zu erhalten. Beispielsweise kann die Ablösung mittels Abkühlung der Negativform unterstützt werden.

Beim Ablösen sollte gewährleistet werden, dass sich die Funktionsschicht vollständig von der Negativform löst. Dies wird neben dem Abkühlen auch von der Wahl des Materials und der Oberflächenbearbeitung der Negativform beeinflusst. Ferner kann durch das Einstellen der Oberflächenrauheit das Ablösen zudem erleichtert werden; besonders glatte Strukturen sind hierbei bevorzugt.

### Beispiel

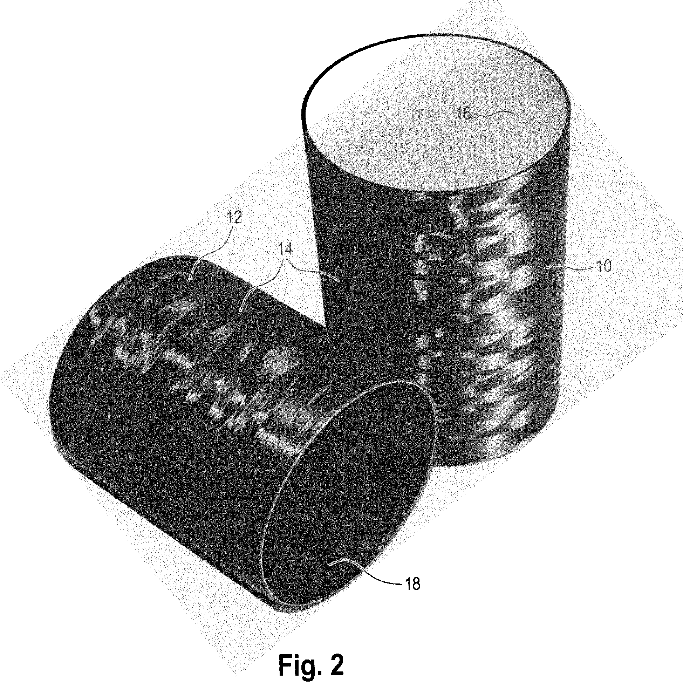

Fig. 2 zeigt zwei nach dem erfindungsgemäßen Verfahren hergestellte Verbundwerkstoff-Bauteile 10 und 12. Hierbei handelt es sich um zwei innenbeschichtete Rohre 10 und 12 mit einem Innendurchmesser von 100 mm und einem Außendurchmesser von 103,2 mm bzw. 104 mm. Der Innendurchmesser der Rohre entspricht dabei dem Außendurchmesser der Negativform. Die äußere Schicht der Rohre bildet die faserverstärkte Kunststoffschicht 14. Als Fasern wurden handelsübliche Kohlenstofffasern (Toray T700SC 12K 50C der Firma Toray, Neu-Isenburg, Deutschland) verwendet und als Matrixwerkstoff ein Epoxidharz (Epoxydharz L + Härter EPH 161 Poxy Systems der Firma R&G, Waldenbuch, Deutschland). Die thermisch gespritzte Funktionsschicht bestand zum einen aus Aluminiumoxid 16 (helle Innenbeschichtung) (Al₂O₃ 99,7% Pulver geschmolzen, -20+5 µm, der Firma Ceram GmbH Ingenieurkeramik, Albbruck, Deutschland) und zum anderen aus Titanoxid 18 (dunkle Innenbeschichtung) (TiO₂ 99% Pulver geschmolzen, - 38+15 µm, der Firma Ceram GmbH Ingenieurkeramik, Albbruck, Deutschland) verwendet. Beide Rohre 10, 12 weisen ferner eine thermisch gespritzte Haftvermittlerschicht auf (nicht sichtbar). Als Haftvermittlerschicht wurde in beiden Fällen Aluminium (Aluminium 99% Pulver gasverdüst, -75+45 µm, Metco 54NS-1 der Firma Oerlikon Management AG, Pfäffikon, Schweiz) verwendet.

In beiden Fällen wurden als Negativform Rohre aus 6060 Aluminiumlegierung verwendet. Diese waren 400 mm lang mit einem Außendurchmesser von 100 mm und einer Wandstärke von 3 mm. Die Kernoberfläche der Negativform wurde vor dem Applizieren der Funktionsschicht geschliffen (mit P800, P1200 und P2000 Schleifpapier) und poliert (Universalpolierpaste der Firma R&G, Waldenbuch, Deutschland).

Das Applizieren der Funktionsschicht sowie der Haftvermittlerschicht auf die Negativform erfolgte mittels atmosphärischem Plasmaspritzens (APS). Dabei wurde ein APS Brenner F6 der Firma GTV Verschleißschutz GmbH, Luckenbach, Deutschland verwendet. Die verwendeten Parameter sind in der folgenden Tabelle zusammengefasst.

| | Funktionsschicht (Al₂O₃); Pulver geschmolzen | Funktionsschicht (TiO₂); Pulver geschmolzen | Haftvermittlerschicht (Al): Pulver gasverdüst |
|---|---|---|---|
| Plasmagase: | | | |
| Ar | 44 L/min | 46 L/min | 45 L/min |
| H₂ | 12 L/min | 8 L/min | 6 L/min |
| Stromstärke (I) | 600 A | 500 A | 470 A |
| Pulverförderung: | | | |
| Ar (Fördergas) | 6 L/min | 6 L/min | 6 L/min |
| Umdrehung Drehteller (r) | 1,8 U/min | 2,0 U/min | 1,2 U/min |

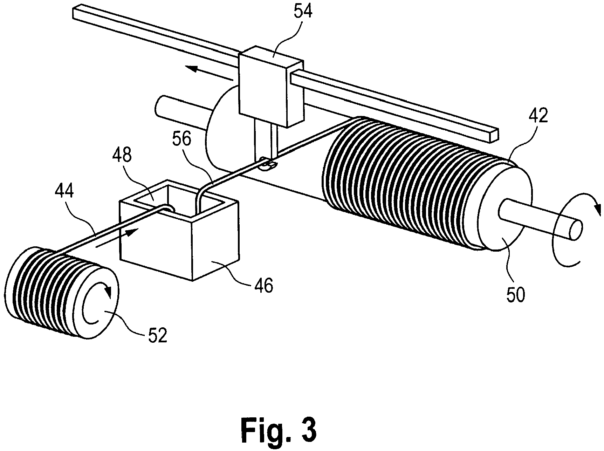

Das Applizieren der faserverstärkten Kunststoffschicht wurde mittels Faserwickelverfahren (vgl. Fig. 3) durchgeführt. Dazu wurden zwei Faserlagen unidirektional und zwei Faserlagen in 80° Ablagewinkel aufgebracht. Die Fadenvorspannung betrug 6 N, die Wickelbreite entsprach der Rohrlänge von ca. 180 mm.

Nachdem die Schichten appliziert wurden, wurde das Harz 24 h bei Raumtemperatur und weitere 16 h bei 65 °C ausgehärtet.

Das Ablösen des fertigen Verbundwerkstoffs von der Negativform wurde mittels Kühlung unterstützt. Dazu wurde der Aluminiumkern der Negativform von innen für 5 min mit zwei CO₂-Lanzen (TSF Düsen, Linspray, der Firma Linde, Pullach, Deutschland) gekühlt. Bei der CO₂ Kühlung wird ein Trockeneis-Gas Gemisch mit einer Temperatur von ca. -73 °C auf das Bauteil gesprüht. Durch die negative Wärmedehnung des Aluminiumkernes wird ein Herausstoßen/Abziehen des fertigen Verbundwerkstoffs erleichtert.

Die Schichtdicken der einzelnen Schichten der beiden Rohre 10 und 12 sind in der folgenden Tabelle zusammengefasst.

| | helle Innenbeschichtung | dunkle Innenbeschichtung |
|---|---|---|
| Funktionsschicht | 260 µm (Al₂O₃) | 160 µm (TiO₂) |
| Haftvermittlerschicht | 140 µm (Al) | 140 µm (Al) |
| faserverstärkte Kunststoffschicht | 1,6 mm | 1,3 mm |

Fig. 3 zeigt ein Faserwickelverfahren 40, welches bei der Herstellung der Verbundwerkstoffe aus Fig. 2 und angewendet wurde. Dieses Verfahren ermöglicht das Auftragen einer Faserschicht 42, wobei die Fasern 44 zuvor durch ein Bad 46 aus flüssigem Matrixwerkstoff 48 gezogen werden. Dabei werden die Fasern 44 getränkt. Bei dem Matrixwerkstoff 48 kann es sich um ein Harz handeln. Für dieses Verfahren eignen sich zylindrische, konische, sphärische oder jede beliebige Gestalt als Negativform 50.

Bei dem Verfahren wird die Negativform 50 gedreht, sodass sich die Faser 44 um die beschichtete Negativform 50 wickeln kann und gleichzeitig von einer Vorratsspule 52 abgezogen wird. Die Faser 44 befindet sich unter Spannung und wird durch eine Imprägniereinheit, dem mit Matrixwerkstoff 48 gefüllten Bad 46, geführt. Mittels einer Führungseinheit 54 wird die Lage der getränkten Fasern 56 auf der beschichteten Negativform 50 gesteuert.

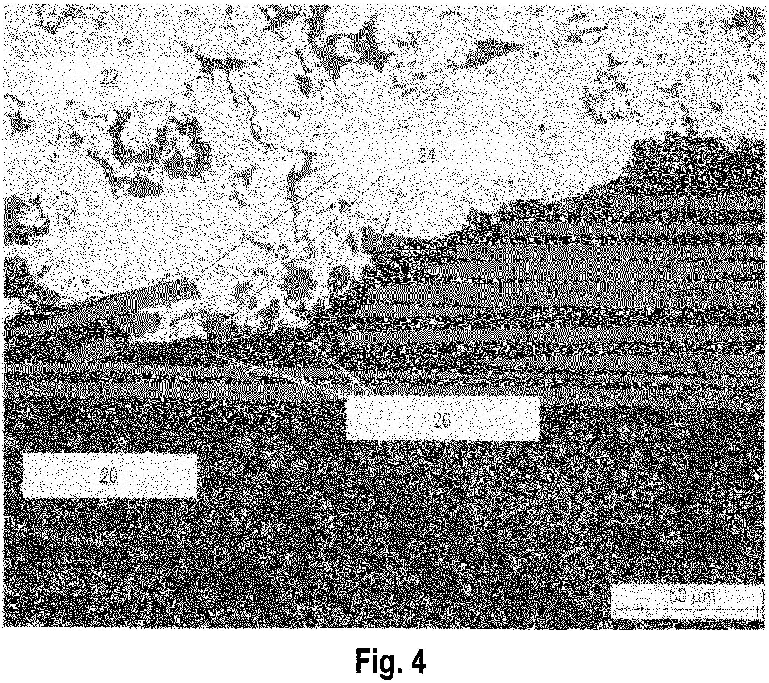

Fig. 4 zeigt eine Lichtmikroskopie-Aufnahme eines Querschnitts eines handelsüblichen, faserverstärkten Kunststoffs, welcher durch das konventionelle Verfahren beschichtet wurde. Dieser besteht aus zwei Schichten: einer faserverstärkten Kunststoffschicht 20 und einer metallischen Haftvermittlerschicht 22 aus Aluminium (auf die Auftragung einer weiteren Schicht wurde hierbei verzichtet). Dieser Kunststoff wurde nach dem konventionellen Verfahren hergestellt. Dieses Verfahren beinhaltete die Verfahrensschritte: 1. Bereitstellung eines faserverstärkten Kunststoffs; 2. Oberflächenaktivierung mittels Sandstrahlen; und 3. Auftragen einer Haftvermittlerschicht mittels thermischen Spritzens.

Besonders deutlich zu erkennen sind die Schädigungen 24 und 26 in der faserverstärkten Kunststoffschicht. Diese Schädigungen wurden durch die Oberflächenaktivierung mittels Sandstrahl und durch das Auftragen der Haftvermittlerschicht erzeugt. Neben den Kohlenstofffaser-Ausbrüchen 24 sind auch Zersetzungen 26 im Bereich der Polymermatrix erkennbar. Die Kohlenstofffaser-Ausbrüche 24 ergeben sich aufgrund der Oberflächenaktivierung. Hierbei wird die Oberfläche aufgerauht und somit vergrößert. Das Aufrauhen hat die Aufgabe die mechanische Verankerung der Beschichtung zu verbessern. Es kommt jedoch wie hier gezeigt zu Beschädigungen der faserverstärkten Kunststoffschicht. Die Zersetzungen 26 in der Polymermatrix ergibt sich primär durch das Beschichtungsverfahren. Beim thermischen Spritzen kommen besonders hohe Temperaturen zu Einsatz. Beim Auftreffen der metallischen Haftvermittlerschicht auf die Matrixschicht kommt es zu Zersetzungsreaktionen.

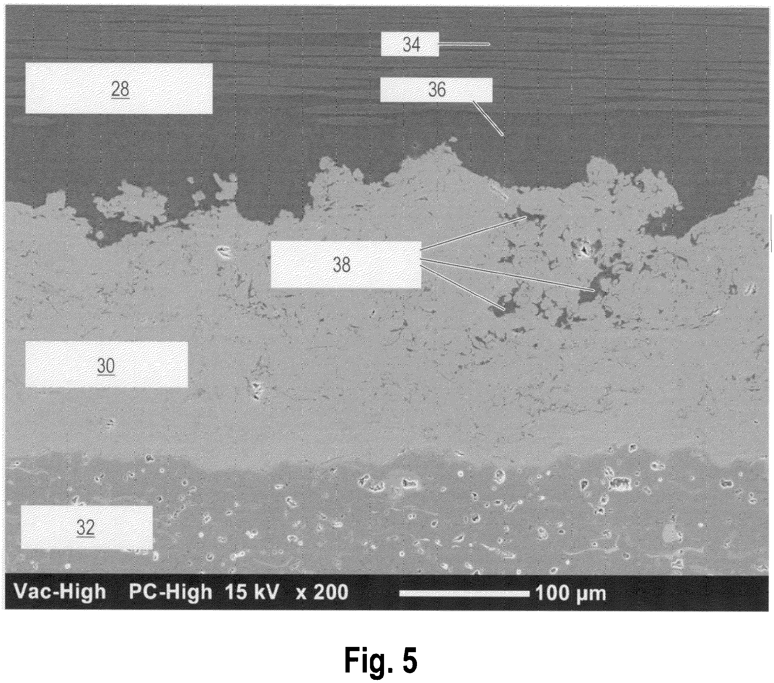

Fig. 5 zeigt eine REM-Aufnahme eines Querschnitts eines erfindungsgemäßen Verbundwerkstoffs. Dieser weist drei Schichten auf: eine faserverstärkte Kunststoffschicht 28, eine Haftvermittlerschicht 30 und eine Funktionsschicht 32.

Die Herstellung dieses Verbundwerkstoffs (Rohr) erfolgte nahezu analog zu dem in Zusammenhang mit Fig. 2 beschriebenen Verfahren, wobei in Abweichung davon als Funktionsschicht eine Keramikschicht aus Al₂O₃/TiO₂ (97%/3%) mittels APS appliziert wurde. Der Innendurchmesser des Rohres betrug 100 mm und der Außendurchmesser 101,4 mm. Die äußere Schicht des Rohres bildet die faserverstärkte Kunststoffschicht 28. Als Faser 34 wurden handelsübliche Kohlenstofffasern (Toray T700SC 12K 50C der Firma Toray, Neu-Isenburg, Deutschland) verwendet und als Matrixwerkstoff ein Epoxidharz (Epoxydharz L + Härter EPH 161 Poxy Systems der Firma R&G, Waldenbuch, Deutschland). Als Material der Funktionsschicht wurde Aluminiumoxid/Titanoxid 32 (Al₂O₃/TiO₂ 97%/3% Pulver geschmolzen, -40+10 µm, der Firma. GTV Implex GmbH, Luckenbach, Deutschland) verwendet. Als Haftvermittlerschicht 30 wurde Aluminium (Aluminium 99% Pulver gasverdüst, -75+45 µm, Metco 54NS-1 der Firma Oerlikon Management AG, Pfäffikon, Schweiz) verwendet.

Als Negativform wurde ein Rohr wie oben erwähnt verwendet.

Das Applizieren der Funktionsschicht sowie der Haftvermittlerschicht auf die Negativform wurde mittels atmosphärischem Plasmaspritzen (APS) durchgeführt. Dabei wurde ein APS Brenner F6 der Firma GTV Verschleißschutz GmbH, Luckenbach, Deutschland verwendet. Die verwendeten Parameter sind in der folgenden Tabelle zusammengefasst.

| | Funktionsschicht (Al₂O₃/TiO₂); Pulver geschmolzen | Haftvermittlerschicht (Al): Pulver gasverdüst |
|---|---|---|
| Plasmagase: | | |
| Ar | 44 L/min | 45 L/min |
| H₂ | 12 L/min | 6 L/min |
| Stromstärke (I) | 600 A | 470 A |
| Pulverförderung: | | |
| Ar (Fördergas) | 6 L/min | 6 L/min |
| Umdrehung Drehteller (r) | 1,8 U/min | 1,2 U/min |

Das Applizieren der faserverstärkten Kunststoffschicht wurde mittels Faserwickelverfahren (vgl. Fig. 3) durchgeführt. Dazu wurden zwei Faserlagen unidirektional und zwei Faserlagen in 80° Ablagewinkel aufgebracht. Die Fadenvorspannung ergibt sich durch das Anbringen an die Faserspule und durch die entsprechende Bremskraft. Die Bremskraft betrug 6 N, die Wickelbreite entsprach der Rohrlänge von ca. 180 mm.

Nachdem die Schichten appliziert wurden, wurde das Harz 24 h bei Raumtemperatur und weitere 16 h bei 65 °C ausgehärtet.

Das Ablösen des fertigen Verbundwerkstoffs von der Negativform (zylindrisch, ohne Konizität) wurde mittels Kühlung unterstützt. Dazu wurde der Aluminiumkern der Negativform von innen für 5 min mit zwei CO₂-Lanzen (TSF Düsen, Linspray, der Firma Linde, Pullach, Deutschland) gekühlt. Die Schichtdicken der einzelnen Schichten sind in der folgenden Tabelle zusammengefasst.

| | |
|---|---|
| Funktionsschicht | 200 µm (Al₂O₃/TiO₂) |
| Haftvermittlerschicht | 180 µm (Al) |
| faserverstärkte Kunststoffschicht | 0,9 mm |

In der REM-Aufnahme in Fig. 5 sind im Vergleich zu Fig. 4 keine Schädigungen zwischen den einzelnen Schichten erkennbar. Vielmehr kann aus Fig. 5 entnommen werden, dass nach dem erfindungsgemäßen Verfahren die Polymermatrix 36 in die darunterliegende Schicht (Haftvermittlerschicht 40) infiltriert wird und es somit zu einer zusätzlichen Mikroverklammerung 38 der einzelnen Schichten kommt.

Um die besonderen Eigenschaften des erfindungsgemäßen Verbundwerkstoff-Bauteils (gemäß dem Beispiel aus Fig. 5) zu untersuchen, wurden einige Messungen durchgeführt. Hierbei wurde unter anderem untersucht, welche Oberflächenrauheit der Negativform besonders bevorzugt ist und welche Haftfestigkeiten durch das erfindungsgemäße Verfahren hergestellt werden können. Die Herstellung der Verbundwerkstoffe erfolgte wie im Beispiel anhand von Fig. 5 beschrieben, sofern nichts anderes angegeben ist.

### Charakterisierung

### 1. Oberflächenkennwertbestimmung

Zunächst wurde untersucht, welche Oberflächenrauheit der Negativform besonders bevorzugt ist. Dafür wurde eine Negativform aus Edelstahl und weitere fünf Negativformen aus Aluminium hergestellt und diese auf unterschiedliche Weise feinbearbeitet. Die Negativform besaß in allen Fällen einen Außendurchmesser von 100 mm. Die Oberflächen der einzelnen Negativformen wurden vor der Herstellung eines innenbeschichteten Rohres (gemäß dem Beispiel aus Fig.5) mittels Weißlichtinterferometrie vermessen. Die Messung wurde mittels des Messgeräts "Contour GT-K" von der Firma Bruker, Billerica, USA durchgeführt. Mittels der dazugehörige Software "Vision 64" wurden die Oberflächenkennwerte Sₐ und S_{z} berechnet. Es wurden folgende Messwerte erhalten:

| Feinbearbeitung | Sₐ [µm] | S_{z} [µm] |
|---|---|---|
| Edelstahlkern unbehandelt | 4,68 | 38,11 |
| Aluminiumkern gestrahlt und 1200 geschliffen | 2,92 | 37,62 |
| Aluminiumkern poliert und gestrahlt | 1,43 | 40,83 |
| Aluminiumkern maschinell poliert, wiederverwendet | 0,59 | 9,36 |
| Aluminiumkern maschinell poliert | 0,63 | 5,12 |
| Aluminiumkern maschinell und handpoliert | 0,57 | 4,46 |

Nachdem die einzelnen Verbundwerkstoff-Bauteile gemäß dem oben beschriebenen Verfahren hergestellt wurden, zeigte sich, dass sich die Verbundwerkstoff-Bauteile besonders gut von der Negativform ablösen lassen, wenn die Oberflächenrauheit der Negativform Oberflächenkennwerte von Sₐ ≤ 3.5 µm und S_{z} ≤ 50 µm aufweisen.

### 2. Haftzugfestigkeit

Für die nächsten Messungen wurde wieder ein innenbeschichtetes Rohr hergestellt. Die Herstellung erfolgte wie anhand von Fig. 5 beschrieben. In dem Versuch wurde die Haftzugfestigkeit der einzelnen Schichten mittels einer Stempelabzugsprüfung untersucht. Das Verfahren wurde in Anlehnung an DIN EN 582 durchgeführt. Dazu wurde auf der Funktionsschicht (Al₂O₃/TiO₂; 97%/3%) des Verbundwerkstoff-Bauteils ein aufgeklebter Stempel (so genannter Prüfstempel) mittels einer Zugprüfmaschine senkrecht zur Oberfläche gleichmäßig langsam bis zum Abriss (Bruch) abgezogen.

Als Abzugsvorrichtung wurde das Model "PAT (Precision Adhesion Testing equipment) AT101E" der Firma DFD Instruments Woking, Großbritannien verwendet. Als Stempeldurchmesser wurde 0 8,16 mm gewählt, wobei die Stirnfläche konvex auf Ø 100 mm gefräst wurde, um passend an der Rohrkrümmung anzuliegen. Als Kleber wurde "Loctite EA 9466" verwendet.

Bei dem Versuch wurden Haftfestigkeiten von > 17 MPa gemessen. Derartige Werte sind nicht bekannt für vergleichbare herkömmliche Verbundwerkstoffe mit thermisch gespritzten Funktionsschichten. Bei herkömmlichen Verbundwerkstoffen werden lediglich maximale Haftfestigkeiten von 13 MPa gemessen, meist jedoch < 10 MPa.

Bei dem Versuch zeigte sich außerdem, dass die Brüche fast ausschließlich innerhalb der Keramikschicht (Al₂O₃/TiO₂) lagen; also innerhalb der äußeren Funktionsschicht. Es kam somit lediglich zu Kohäsionsbrüchen der äußersten Schicht. Die anderen Schichten blieben dagegen meist unversehrt. Mittels des erfindungsgemäßen Verfahrens lässt sich demnach eine besonders gute Haftung zwischen dem faserverstärkten Kunststoff und der Haftvermittlerschicht erzielen.

## Patentansprüche

1. Verfahren zur Herstellung eines Verbundwerkstoff-Bauteils mit den folgenden Schritten:
(a) Bereitstellung einer Negativform (S10);
(b) Applizieren zumindest einer Funktionsschicht mittels thermischen Spritzens auf die Negativform (S12);
(c) Applizieren zumindest einer faserverstärkten Kunststoffschicht mit einem aushärtbaren Matrixwerkstoff (S14);
(d) Aushärtung des Matrixwerkstoffs (S16); und
(e) Ablösen des Verbundwerkstoff-Bauteils von der Negativform (S18), um ein Verbundwerkstoff-Bauteil zu erhalten.

2. Verfahren nach Anspruch 1, bei dem nach dem Schritt (b) und vor dem Schritt (c) eine Haftvermittlerschicht appliziert wird, bevorzugt mittels thermischen Spritzens.

3. Verfahren nach Anspruch 1 oder 2, bei dem die Haftvermittlerschicht aus einem Metall und/oder einer Metalllegierung besteht, insbesondere aus Aluminium, Nickel, Stahl, Zink, Titan, Molybdän, Chrom, Kobalt, Silizium, Legierungen und/oder Mischungen davon.

4. Verfahren nach einem der voranstehenden Ansprüche, bei dem die Funktionsschicht und/oder die Haftvermittlerschicht mit einer Dicke von 20 bis 1000 µm appliziert wird, bevorzugt mit einer Dicke von 50 bis 500 µm, insbesondere bevorzugt mit einer Dicke von 100 bis 200 µm.

5. Verfahren nach einem der voranstehenden Ansprüche, bei dem die Negativform feinbearbeitet wird (S21), insbesondere poliert, geschliffen und/oder geläppt wird.

6. Verfahren nach einem der voranstehenden Ansprüche, bei dem die Negativform aus einem Material hergestellt wird, das aus der Gruppe ausgewählt wird, die aus Metallen, Metalllegierungen, Kunststoffen, Keramiken, Salzen oder Glas besteht, und bei dem die Negativform bevorzugt eine rotationssymmetrische Form aufweist, insbesondere bevorzugt eine konische rotationssymmetrische Form.

7. Verfahren nach einem der voranstehenden Ansprüche, bei dem als Funktionsschicht eine Metallschicht, eine Keramikschicht und/oder Cermet-Schicht appliziert wird.

8. Verfahren nach einem der voranstehenden Ansprüche, bei dem das Applizieren der Funktionsschicht und/oder das Applizieren der Haftvermittlerschicht mittels thermischen Spritzens durchgeführt wird, das aus der Gruppe ausgewählt wird, die aus Schmelzbadspritzen, Lichtbogenspritzen, Plasmaspritzen, Flammspritzen, Hochgeschwindigkeitsflammspritzen, Kaltgasspritzen, Drahtflammspritzen, Pulverflammspritzen, Detonationsspritzen, Suspensionsspritzen, Präkursorspritzen und Laserspritzen besteht.

9. Verfahren nach einem der voranstehenden Ansprüche, bei dem das Applizieren der faserverstärkten Kunststoffschicht mittels eines Verfahrens durchgeführt wird, dass aus der Gruppe ausgewählt wird, die aus Handlaminieren, Faserspritzen, Pressen, Pultrusionsverfahren, Spritzguss, Spritzverfahren, Radial-, Kreuz-, Polar-Faserwickelverfahren, Harzinjektionsverfahren und Autoklavverfahren besteht.

10. Verfahren nach einem der voranstehenden Ansprüche, bei dem die faserverstärkte Kunststoffschicht Fasern aufweist, die ausgewählt sind aus der Gruppe bestehend aus organischen Fasern, anorganischen Fasern, metallischen Fasern, Naturfasern und/oder Mischungen hieraus.

11. Verfahren nach einem der voranstehenden Ansprüche, bei dem die Fasern in einem aushärtbaren Matrixwerkstoff getränkt werden.

12. Verfahren nach einem der voranstehenden Ansprüche, bei dem der Matrixwerkstoff ein Harz ist.

13. Verfahren nach einem der voranstehenden Ansprüche, bei dem die faserverstärkte Kunststoffschicht mit einer Dicke von ≥ 500 µm appliziert wird, bevorzugt von ≥ 700 µm, insbesondere bevorzugt von ≥ 900 µm, wobei die Dicke bevorzugt höchstens 5 cm ist.

14. Verfahren nach einem der voranstehenden Ansprüche, bei dem die Negativform gekühlt wird, um das Ablösen des Verbundwerkstoff-Bauteils zu unterstützen.

15. Verbundwerkstoff-Bauteil mit einer thermisch gespritzten Funktionsschicht und einer faserverstärkten Kunststoffschicht, bei dem die thermisch gespritzte Funktionsschicht einen Oberflächenkennwert von Sₐ ≤ 3.5 µm und S_{z} ≤ 50 µm aufweist, insbesondere von Sₐ ≤ 2.5 µm und S_{z} ≤ 40 µm, vorzugsweise hergestellt nach einem der vorhergehenden Ansprüche, wobei es sich bevorzugt um ein innenbeschichtetes Rohr handelt, bevorzugt mit einem Innendurchmesser von ≤ 1000 mm, weiter bevorzugt von ≤ 500 mm, weiter bevorzugt von ≤ 200 mm, weiter vorzugsweise mit einem Innendurchmesser von ≥ 10 mm.
